# EUROPEAN PATENT APPLICATION

(11) **EP 4 742 614 A1**
(43) Date of publication of application: **13.05.2026**
(21) Application number: 24852125.4
(22) Date of filing: 24.07.2024
(51) Int. Cl.: H04L 41/5067, H04W 24/08, H04W 8/24, H04W 24/10, H04W 24/02, H04L 41/0813, H04L 43/062

(54) **METHOD AND APPARATUS RELATING TO QUALITY OF EXPERIENCE (QOE) MEASUREMENT IN WIRELESS MOBILE COMMUNICATION SYSTEM**

(30) Priority: 04.08.2023 KR 20230102068
(71) Applicant: Samsung Electronics Co., Ltd., Suwon-si, Gyeonggi-do 16677 (KR)
(72) Inventor: JEONG, Seungbeom, Suwon-si Gyeonggi-do 16677 (KR); JUNG, Sangyeob, Suwon-si Gyeonggi-do 16677 (KR)
(74) Representative: Nederlandsch Octrooibureau
(86) International application number: PCT/KR2024/010677
(87) International publication number: WO 2025/033769

(57) **Abstract**

The present disclosure relates to a 5G or 6G communication system for supporting a higher data transmission rate. A method performed by a terminal according to the present disclosure may comprise the steps of: receiving, from a base station, a message including configuration information regarding quality of experience (QoE); and transmitting a message for reporting a result of QoE measurement on the basis of the configuration information, wherein the configuration information includes information indicating a first signaling radio bearer (SRB) for an encapsulated QoE measurement report and information indicating a second SRB for a radio access network (RAN) visible QoE measurement report.

## Description

### [Technical Field]

The disclosure relates to a communication method and apparatus in a wireless communication system and, particularly, to a method and apparatus for quality of experience (QoE) measurement.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 preprocessing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

As various services have become available with the advancement of mobile communication systems, there is a need for methods to effectively provide such services. In particular, a method for providing an efficient DRX (Discontinuous Reception) configuration is required.

### [Disclosure of Invention]

### [Technical Problem]

An aspect of the disclosure is to provide an effective method and apparatus for quality of experience (QoE) measurement in a wireless communication system.

### [Solution to Problem]

A method for processing a control signal in a wireless communication system includes receiving a first control signal transmitted from a base station, processing the received first control signal, and transmitting, to the base station, a second control signal generated based on the processing.

### [Advantageous Effects of Invention]

The disclosure provides a method and apparatus capable of effectively measuring a quality of experience (QoE) in a wireless communication system.

### [Brief Description of Drawings]

FIG. 1 illustrates a structure of a wireless communication system according to an embodiment of the disclosure.
FIG. 2 illustrates radio access state transition in a wireless mobile communication system according to an embodiment of the disclosure.
FIG. 3 is a flowchart illustrating a procedure for configuring/reporting signaling-based QoE measurement in an embodiment of the disclosure.
FIG. 4 is a flowchart illustrating a procedure for configuring/reporting management-based QoE measurement in an embodiment of the disclosure.
FIG. 5 is a flowchart illustrating a procedure for configuring and reporting RAN visible QoE measurement according to an embodiment of the disclosure.
FIG. 6 is a diagram illustrating an SRB path in an SA situation according to an embodiment of the disclosure.
FIG. 7 is a diagram illustrating an SRB path in a DC situation according to an embodiment of the disclosure.
FIG. 8 is a block diagram illustrating an internal structure of a UE, which is applied to embodiments of the disclosure.
FIG. 9 is a block diagram illustrating a structure of a base station, which is applied to embodiments of the disclosure.

### [Mode for the Invention]

Hereinafter, embodiments of the disclosure will be described in detail with reference to the accompanying drawings. Also, in describing the disclosure, a detailed description of known functions or configurations will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the following description of the disclosure, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, the terms "physical channel" and "signal" may be interchangeably used with the term "data" or "control signal". For example, the term "physical downlink shared channel (PDSCH)" refers to a physical channel over which data is transmitted, but the PDSCH may also be used to refer to the "data". That is, in the disclosure, the expression "transmit ting a physical channel" may be construed as having the same meaning as the expression "transmitting data or a signal over a physical channel".

In the following description of the disclosure, upper signaling refers to a signal transfer scheme from a base station to a terminal via a downlink data channel of a physical layer, or from a terminal to a base station via an uplink data channel of a physical layer. The upper signaling may also be understood as radio resource control (RRC) signaling or a media access control (MAC) control element (CE).

In the following description of the disclosure, terms and names defined in the 3rd generation partnership project new radio (3GPP NR) or 3GPP long term evolution (3GPP LTE) standards will be used for the sake of descriptive convenience. However, the disclosure is not limited by these terms and names, and may be applied in the same way to systems that conform other standards. In the disclosure, the term "g NB" may be interchangeably used with the term "e NB" for the sake of descriptive convenience. That is, a base station described as "eNB" may refer to "gNB". Furthermore, the term "terminal" may refer to not only a mobile phone, an MTC device, an NB-IoT device, and a sensor, but also other wireless communication devices.

In the following description, a base station is an entity that allocates resources to terminals, and may be at least one of a gNode B (gNB), an eNode B (eNB), a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. Of course, the base station is not limited to the above examples.

In particular, the disclosure may be applied to 3GPP NR (5th generation mobile communication standard). In addition, the disclosure may be applied to intelligent services (e.g., smart homes, smart buildings, smart cities, smart cars or connected cars, healthcare, digital education, retail business, security and safety-related services, etc.) on the basis of 5G communication technology and IoT-related technology. In the disclosure, the term "eNB" may be interchangeably used with the term "gNB" for the sake of descriptive convenience. That is, a base station described as "eNB" may refer to "gNB". In addition, the term "terminal" may refer to not only mobile phones, NB-IoT devices, and sensors, but also any other wireless communication devices.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) (or eNode B), and the downlink refers to a radio link via which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

According to some embodiments, eMBB may aim at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique may be required to be improved. Also, the data rate required for the 5G communication system may be obtained using a frequency bandwidth more than 20MHz in a frequency band of 3 to 6GHz or 6GHz or above, instead of transmitting signals using a transmission bandwidth up to 20MHz in a band of 2GHz used in LTE.

In addition, mMTC is being considered to support application services such as the Internet of Things (IoT) in the 5G communication system. mMTC may have requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km²) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5ms, and may also require a packet error rate of 10⁻⁵ or less. Therefore, for the services supporting URLLC, a 5G system must provide a transmit time interval (TTI) shorter than those of other services, and may also require a design for assigning a large number of resources in a frequency band in order to secure reliability of a communication link.

The above-described three services considered in the 5G communication system, that is, eMBB, URLLC, and mMTC, may be multiplexed and transmitted in a single system. In this case, different transmission/reception techniques and transmission/reception parameters may be used between services in order to satisfy different requirements of the respective services. However, the above-described mMTC, URLLC, and eMBB are merely examples of different types of services, and service types to which the disclosure is applied are not limited to the above examples.

In the following description of embodiments of the disclosure, LTE, LTE-A, LTE Pro, or 5G (or NR, next-generation mobile communication) systems will be described by way of example, but the embodiments of the disclosure may be applied to other communication systems having similar backgrounds or channel types. Furthermore, based on determinations by those skilled in the art, embodiments of the disclosure may also be applied to other communication systems through some modifications without significantly departing from the scope of the disclosure.

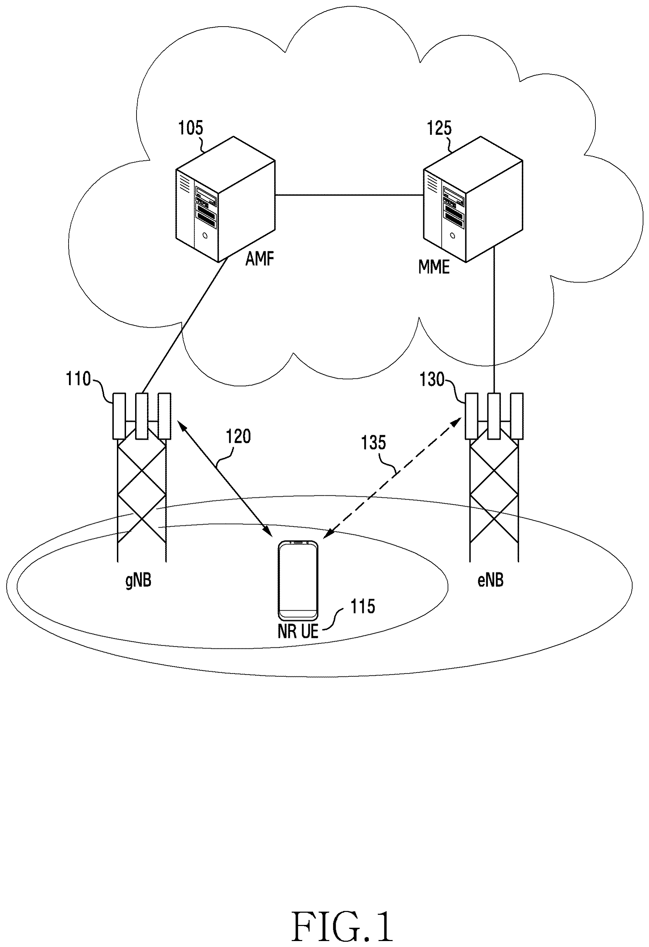

FIG. 1 illustrates a structure of a wireless communication system according to an embodiment of the disclosure.

Referring to FIG. 1, as illustrated therein, a radio access network of a next-generation mobile communication system (new radio, NR) may include a next-generation base station (new radio Node B, hereinafter gNB) 110 and an AMF (new radio core network) 105. The wireless communication system is not limited by the structure illustrated in FIG. 1, and may include a larger or smaller number of components than those of the structure in FIG. 1. A user terminal (new radio user equipment, hereinafter NR UE or terminal) 115 may access an external network via the gNB 110 and the AMF 105.

In FIG. 1, the gNB may correspond to an evolved Node B (eNB) of the conventional LTE system. The gNB may be connected to the NR UE through a radio channel and provide outstanding services as compared to a conventional node B (120). In the mobile communication system, since all user traffic is serviced through a shared channel, a device that collects state information, such as buffer statuses, available transmit power states, and channel states of UEs, and performs scheduling accordingly s required, and the gNB 110 may serve as the device. In general, one gNB may control multiple cells. In order to implement ultrahigh-speed data transfer beyond the current LTE, the method and apparatus according to an embodiment of the disclosure may use a wider bandwidth than the existing maximum bandwidth, may employ an orthogonal frequency division multiplexing (hereinafter referred to as OFDM) as a radio access technology, and may additionally integrate a beamforming technology therewith. In addition, the method and apparatus may employ an adaptive modulation & coding (hereinafter referred to as "AMC") scheme for determining a modulation scheme and a channel coding rate according to a channel state of a UE.

The core network is a device responsible for various control functions as well as a mobility management function for UEs, and may be connected to multiple base stations. Also, the 5GC may interwork with the conventional LTE system.

The wireless communication system (or network) according to an embodiment of the disclosure may be configured to be divided into a user plane (UP) related to actual user data transmission and control plane (CP) such as connection management, the gNB 110 may use UP and CP techniques defined in the NR technology, and even though connected to the 5GC, the eNB 130 may use UP and CP techniques defined in the long term evolution (LTE) technology.

The AMF 105 performs functions such as mobility support, bearer configuration, and QoS configuration. The AMF is a device responsible for various control functions as well as a mobility management function for a UE, and is a connected to multiple base stations. In addition, the wireless mobile communication system according to an embodiment of the disclosure may interwork with the conventional LTE system, and the AMF may be connected to a mobility management entity (MME) 125 via a network interface. The MME may be connected to the eNB 130 that is an existing base station. A UE supporting LTE-NR dual connectivity may transmit/receive data while maintaining connections to both the gNB and the eNB (135).

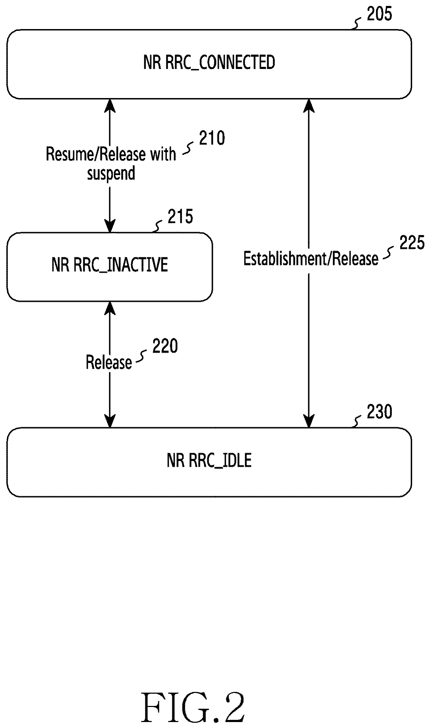

FIG. 2 illustrates radio access state transition in a mobile communication system according to an embodiment of the disclosure.

In the mobile communication system, there are three types of radio access states (radio resource control (RRC) states). A connected mode (RRC_CONNECTED) 205 refers to a radio access state in which a UE is able to transmit/receive data. An idle mode (RRC_IDLE) 230 refers to a radio access state in which a UE monitors whether paging is transmitted to the UE. The two modes are radio access states that are also applied to the conventional LTE system, and the technical particulars thereof may be the same as those of the conventional LTE system.

In the mobile communication system, an inactive (RRC_INACTIVE) radio access state 215 may be defined. In the inactive radio access state, UE context is maintained in a base station and a UE, and radio access network (RAN)-based paging is supported. The characteristics of the inactive radio access state is enumerated as follows.
- Cell re-selection mobility;
- CN - NR RAN connection (both C/U-planes) has been established for UE;
- The UE AS context is stored in at least one gNB and the UE;
- Paging is initiated by NR RAN;
- RAN-based notification area is managed by NR RAN;
- NR RAN knows the RAN-based notification area which the UE belongs to;

The inactive radio access state may transition to the connected mode or the idle mode by using a specific procedure. The inactive mode transitions to the connected mode according to a resume procedure, and the connected mode transitions to the inactive mode by using a release procedure including suspend configuration information (210). This procedure may be performed by transmitting/receiving one or more RRC messages between the UE and the base station, and may include one or more operations. Furthermore, through the release procedure after the resume procedure, the UE may transition from the inactive mode to the idle mode

(220). The transition between the connected mode and the idle mode may follow the conventional LTE technology. That is, the transition between the modes may be performed through an establishment or release procedure (225).

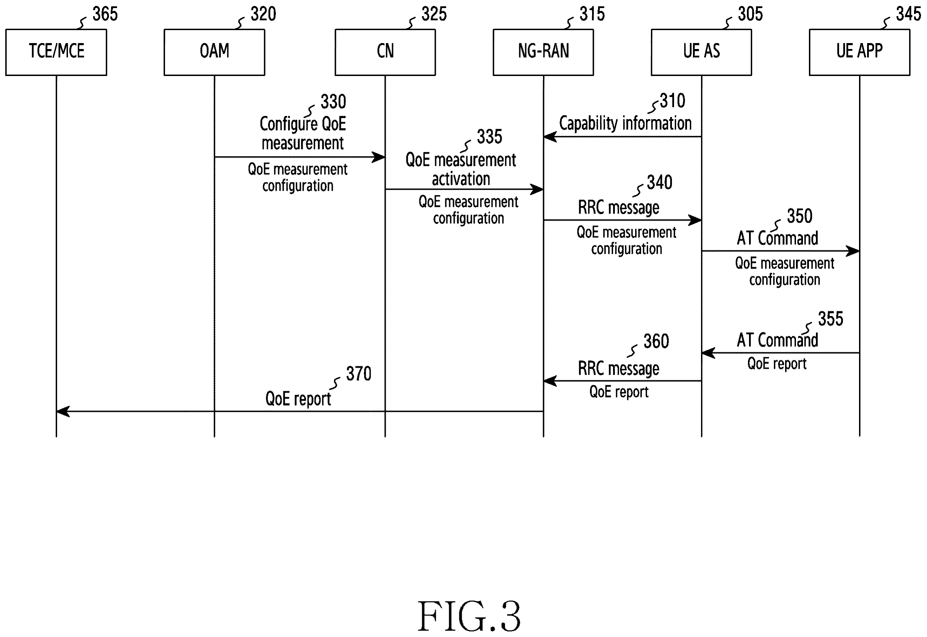

FIG. 3 is a flowchart illustrating a procedure of configuring/reporting signaling-based QoE measurement in an embodiment of the disclosure. An access stratum (AS) 305 of a user equipment (UE) may transmit information (e.g., qoe-Streaming-MeasReport, qoe-MTSI-MeasReport, and qoe-VR-MeasReport) indicating whether quality of experience (QoE) measurement is supported for each service type (e.g., streaming, MTSI, VR) to a base station (or NG-RAN 315) via a UE capability message (e.g., UECapabilityInformation) in operation 310. Before the UE capability message is transmitted, the base station may transmit a message (e.g., UECapabilityEnquiry) for requesting the UE capability message. In addition, the UE may report (or transmit) whether RAN visible QoE measurement is supported (e.g., ran-VisibleQoE-Streaming-MeasReport, ran-VisibleQoE-VR-MeasReport) for each service type (e.g., streaming, VR) to the base station via the UE capability message. In addition, the UE may report (or transmit) whether UL RRC segmentation for a QoE report message is supported (e.g., ul-MeasurementReportAppLayer-Seg) to the base station via the UE capability message. The UE capability message includes ASN.1 information as shown in Table 1 below, and a description of related parameters is as given in Table 2 below.

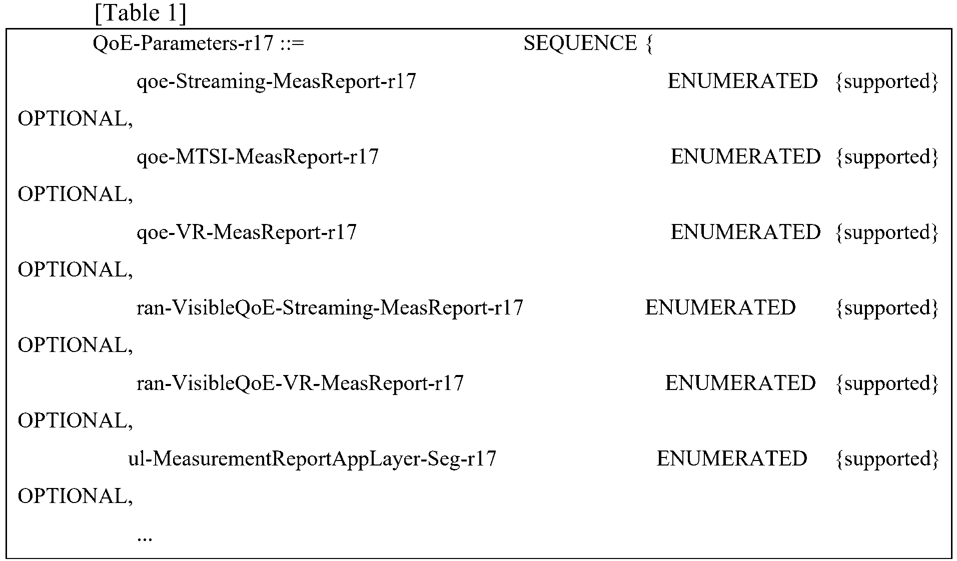

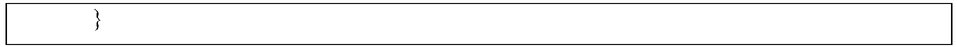

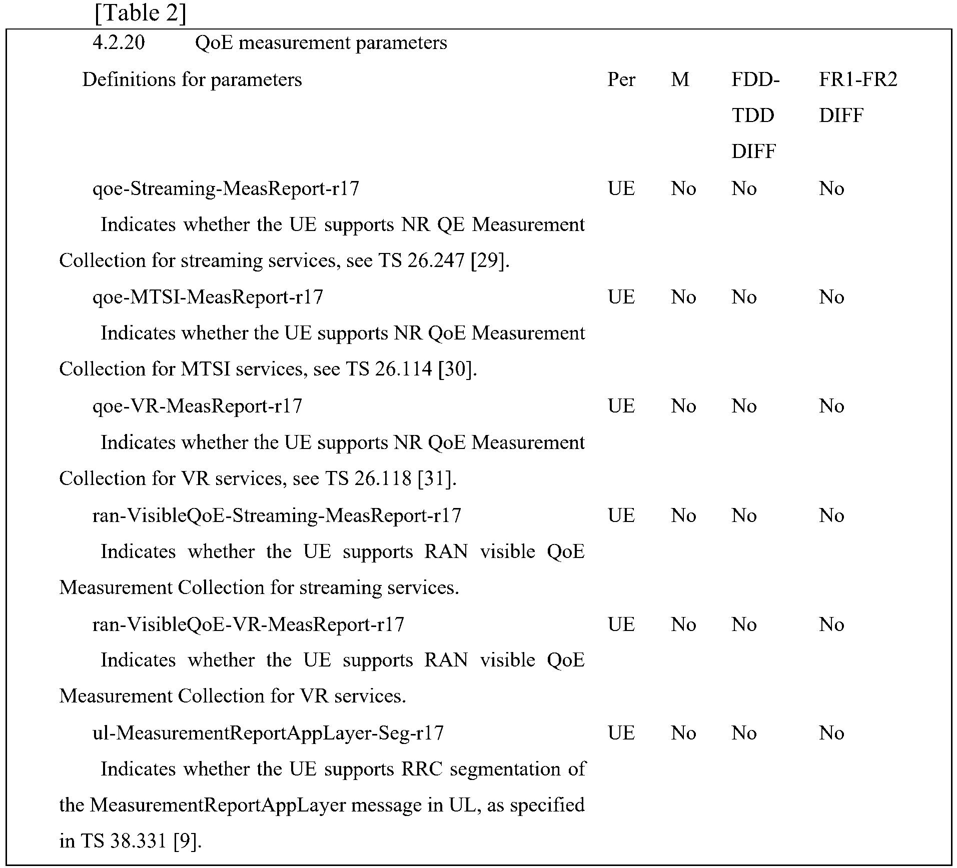

Service types that may be supported in LTE may include streaming and multimedia telephony service for IMS (IP Multimedia Subsystem) (MTSI). In the case of NR, in addition to these, a virtual reality (VR) service may be supported, and additionally, multimedia broadcast multicast services (MBMS) and extended reality (XR) services may be supported.

Operations administration and maintenance (OAM) 320 may provide QoE measurement configuration information to a core network (CN) 325 in operation 330. The CN 325 that receives the configuration information may activate QoE measurement by transmitting the configuration information to the base station 315 in operation 335.

The base station 315 that receives the configuration information from the CN 325 may transfer the QoE configuration information to the AS 305 of the UE via an RRC message (e.g., RRCReconfiguration or RRCResume message) in operation 340. The RRC message may include an IE(APPLayerMeasConfig) as shown in [Table 3] below, and a description of related parameters is as shown in [Table 4] below.

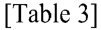

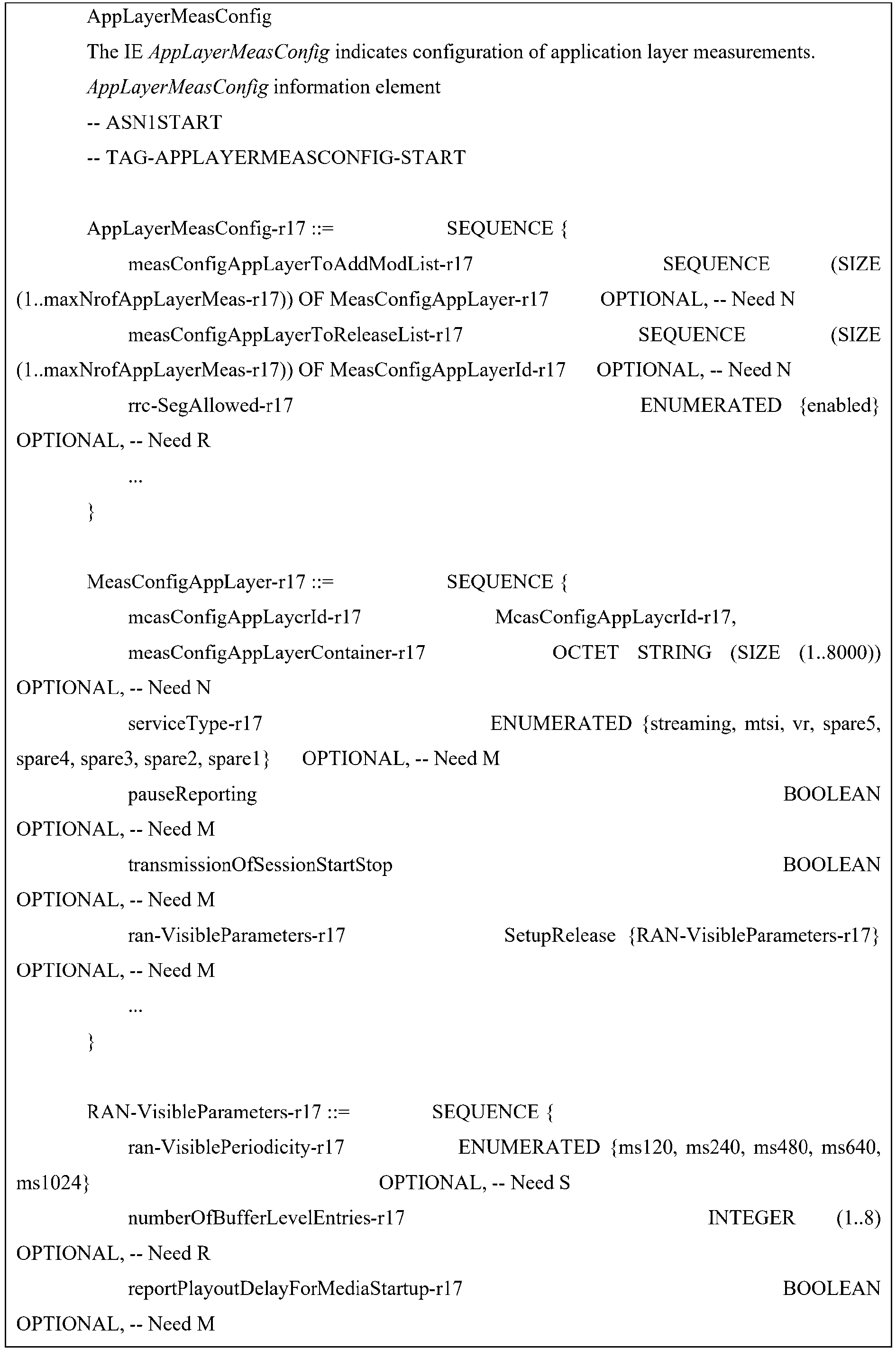

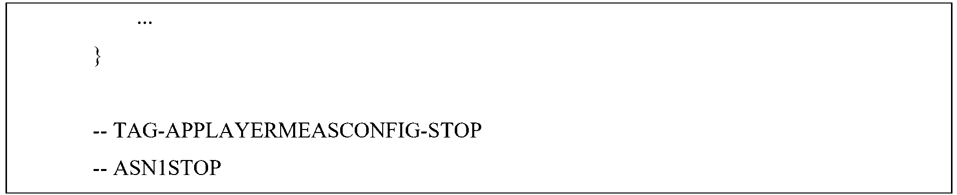

**[Table 4]**

| |
|---|
| AppLayerMeasConfig field descriptions |
| measConfigAppLayerContainer |
| The field contains configuration of application layer measurements, see Annex L (normative) in TS 26.247 [68], clause 16.5 in TS 26.114 [69] and TS 26.118 [70]. |
| pauseReporting |
| The field indicates whether the transmission of *measReportAppLayerContainer* is paused or not. |
| ran-VisibleParameters |
| The field indicates whether RAN visible application layer measurements shall be reported or not. The field is optionally present when *serviceType* is set to *streaming* or *vr.* Otherwise, it is absent. |
| rrc-SegAllowed |
| This field indicates that RRC segmentation of *MeasurementReportAppLayer* is allowed. It may be present only if the UE supports RRC segmentation of the *MeasurementReportAppLayer* message in UL. |
| service Type |
| Indicates the type of application layer measurement. Value streaming indicates Quality of Experience Measurement Collection for streaming services (see TS 26.247 [68]), value mtsi indicates Quality of Experience Measurement Collection for MTSI (see TS 26.114 [69]). value vr indicates Quality of Experience Measurement Collection for VR service (see TS 26.118 [70]). The network always configures *serviceType* when application layer measurements are initially configured and at *fullConfig.* |
| transmissionOfSessionStartStop |
| The field indicates whether the UE shall transmit indications when sessions in the application layer start and stop. The UE transmits a session start indication upon configuration of this field if a session already has started in the application layer. |

In addition, the operation of the UE AS 305 that receives the same may follow a description provided in Table 5 below.

**[Table 5]**

| | | | | **5.3.5.13d Application layer measurement configuration** | | | |
|---|---|---|---|---|---|---|---|
| | | | The UE shall: | | | | |
| | 1> | if measConfigAppLayerToReleaseList is included in appLayerMeasConfig within RRCReconfiguration or RRCResume: | | | | | |
| | | 2> | for each measConfigAppLayerId value included in the measConfigAppLayerToReleaseList: | | | | |
| | | | 3> | | forward the *measConfigAppLayerId* and inform upper layers about the release of the application layer measurement configuration including any RAN visible application layer measurement configuration; | | |
| | | | 3> | | discard any application layer measurement report received from upper layers; | | |
| | | | 3> | | consider itself not to be configured to send application layer measurement report for the *measConfigAppLayerId.* | | |
| | 1> | if measConfigAppLayerToAddModList is included in appLayerMeasConfig within RRCReconfiguration or RRCResume: | | | | | |
| | | 2> | for each measConfigAppLayerId value included in the measConfigAppLayerToAddModList: | | | | |
| | | | 3> | | if *measConfigAppLayerContainer* is included for the corresponding *MeasConfigAppLayer* configuration: | | |
| | | | | | 4> | forward the measConfigAppLayerContainer, the measConfigAppLayerId and the serviceType to upper layers considering the serviceType; | |
| | | | 3> | | consider itself to be configured to send application layer measurement report for the *measConfigAppLayerId* in accordance with 5.7.16; | | |
| | | | 3> | | forward the *transmissionOfSessionStartStop,* if configured, and *measConfigAppLayerId* to upper layers considering the *serviceType*; | | |
| | | | 3> | | if *ran-VisibleParameters* is set to setup and the parameters have been received: | | |
| | | | | | 4> | forward the *measConfigAppLayerId,* the *ran-VisiblePeriodicity*, if configured, the *numberOfBufferLevelEntries*, if configured, and the | |
| | | | | | | *reportPlayoutDelayForMediaStartup*, if configured, to upper layers considering the *serviceType*; | |
| | | | 3> | | else if *ran-VisibleParameters* is set to release: | | |
| | | | | | 4> | forward the *measConfigAppLayerId* and inform upper layers about the release of the RAN visible application layer measurement configuration; | |
| | | | 3> | | if pauseReporting is set to true: | | |
| | | | | | 4> | if at least one segment, but not all segments, of a segmented | |
| | | | | | | *MeasurementReportAppLayer* message containing an application layer measurement report associated with the *measConfigAppLayerId* has been submitted to lower layers for transmission: | |
| | | | | | | 5> | submit the remaining segments of the *MeasurementReportAppLayer* message to lower layers for transmission; |
| | | | | | 4> | suspend submitting application layer measurement report containers to lower layers for the application layer measurement configuration associated with the *measConfigAppLayerId;* | |
| | | | | | 4> | store any previously or subsequently received application layer measurement report containers associated with the *measConfigAppLayerId* for which no segment, or full message, has been submitted to lower layers for transmission; | |
| | | | | 3> | else if *pauseReporting* is set to *false* and if transmission of application layer measurement report containers has previously been suspended for the application layer measurement configuration associated with the *measConfigAppLayerId*: | | |
| | | | | | 4> | submit stored application layer measurement report containers to lower layers, if any, for the application layer measurements configuration associated with the *measConfigAppLayerId;* | |
| | | | | | 4> | resume submitting application layer measurement report containers to lower layers for the application layer measurement configuration associated with the *measConfigAppLayerId;* | |
| | | | | | | | NOTE 1:The UE may discard reports when the memory reserved for storing application layer measurement reports becomes full. |
| | | | | | | | NOTE 2:The transmission of RAN visible application layer measurement reports is not paused when *pauseReporting* is set to *true.* |

As described above, in the case of a QoE measurement configuration included in measConfigAppLayerToAddModList, the UE's AS layer 305 may transfer (or transmit) the configuration information to the UE's upper layer or application layer (UE APP 345) via an AT command in operation 350. In addition, the UE's AS layer 305 may transmit an AT command to the UE's APP 345 to delete stored configuration information for the QoE measurement configuration included in measConfigAppLayerToAddReleaseList.

QoE measurement may be performed according to the received configuration information. In addition, the UE APP 345 may report (or transmit) a result of measurement according to the configuration information to the UE AS 305 via an AT command in operation 355.

The UE AS 305 that receives the same may report the measurement result to the base station 315 via an RRC message (e.g., MeasurementReportAppLayer message) in operation 360. Signaling radio bearer (SRB) 4 may be used for reporting the QoE measurement result. The MeasurementReportAppLayer message may include ASN.1 as shown in Table 6 below, and a description of related parameters is as given in Table 7 below.

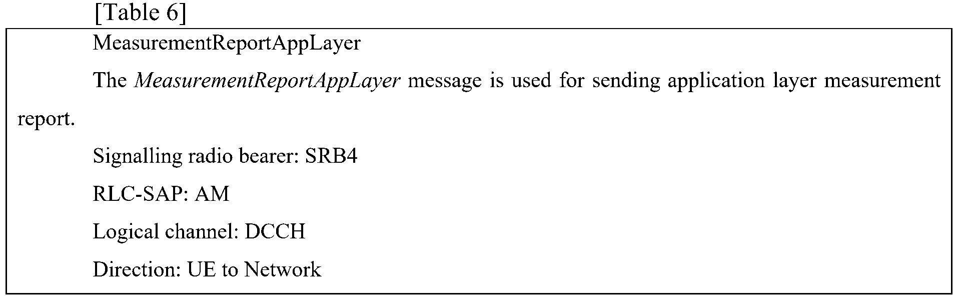

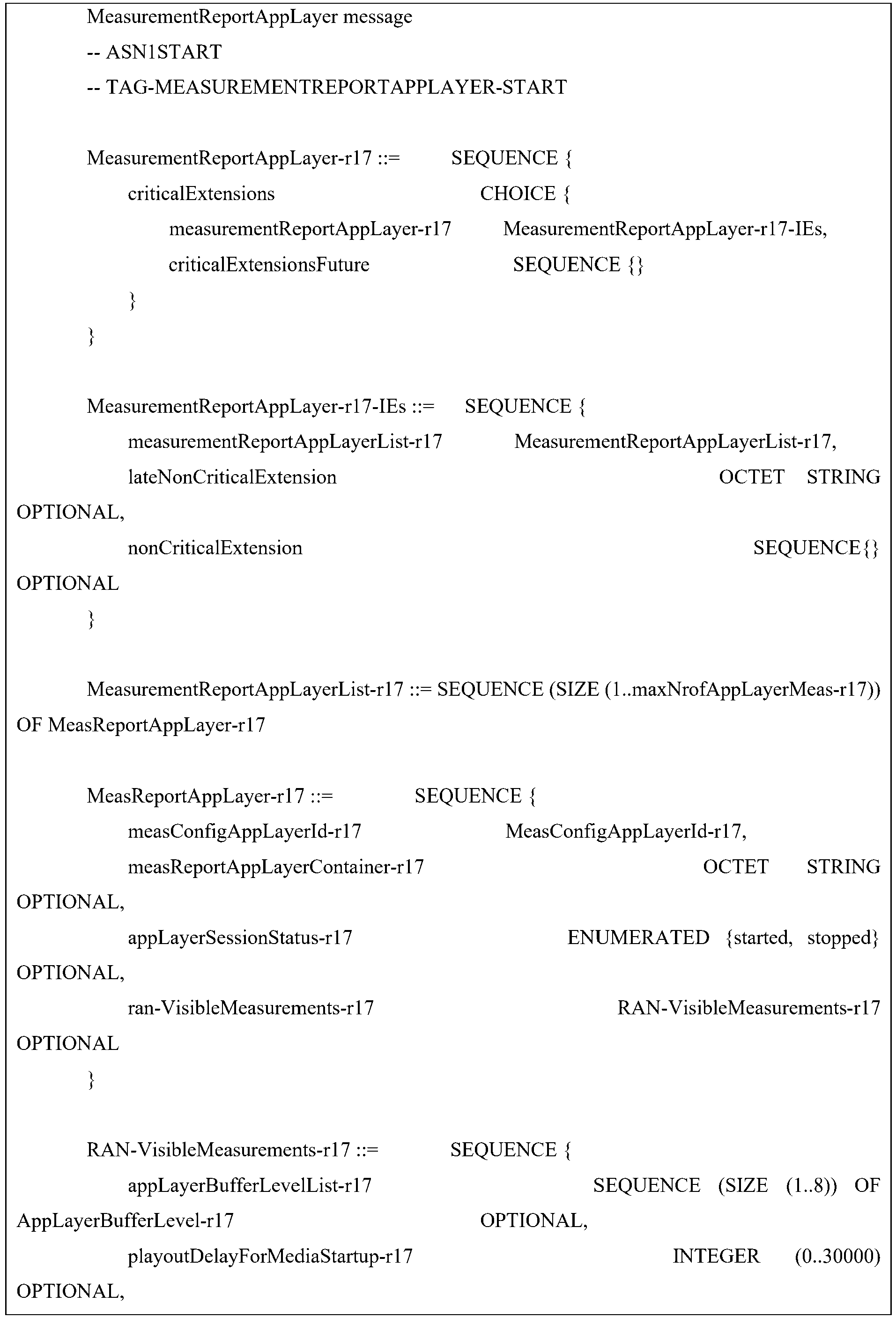

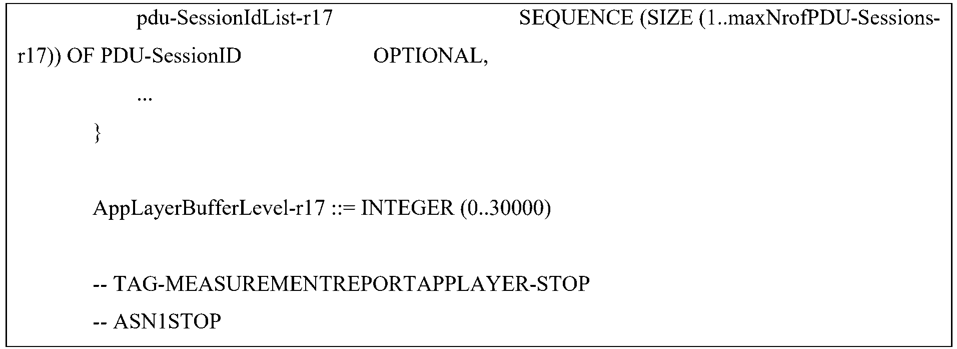

**[Table 7]**

| MeasurementReportAppLayer field descriptions |
|---|
| appLayerBufferLevelList |
| The field indicates a list of application layer buffer levels, and each *AppLayerBufferLevel* indicates the application layer buffer level in ms. Value 0 corresponds to 0ms, value 1 corresponds to 10ms, value 2 corresponds to 20 ms and so on. If the buffer level is larger than the maximum value of 30000 (5 minutes), the UE reports 30000. |
| appLayerSessionStatus |
| Indicates that an application layer measurement session in the application layer starts or ends. |
| playoutDelayForMediaStartup |
| Indicates the application layer playout delay for media start-up in ms. Value 0 corresponds to 0ms, value 1 corresponds to 1ms, value 2 corresponds to 2 ms and so on. If the playout delay for media start-up is larger than the maximum value of 30000ms, the UE reports 30000. |
| measReportAppLayerContainer |
| The field contains application layer measurement report, see Annex L (normative) in TS 26.247 [68], clause 16.5 in TS 26.114 [69] and TS 26.118 [70]. |
| pdu-SessionIdList |
| Contains the identity of the PDU session, or the identities of the PDU sessions, used for application data flows subject to the RAN visible application layer measurements. |

In addition, a specific procedure in which the UE AS reports the above measurement result may follow the operation described in Table 8 below.

**[Table 8]**

| | |
|---|---|
| 5.7.16 | Application layer measurement reporting |
| 5.7.16.1 | General |
| 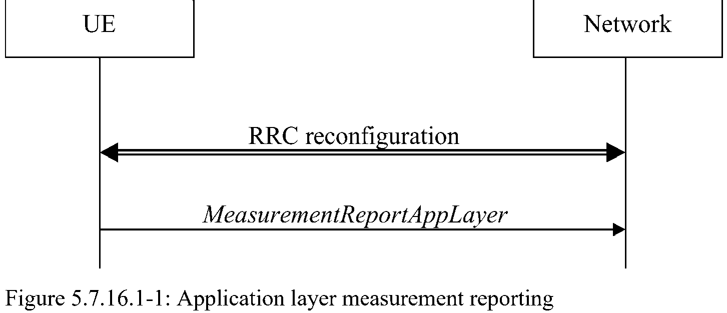 | |
| The purpose of this procedure is to send application layer measurement reports to the network. | |
| 5.7.16.2 Initiation | |
| A UE capable of application layer measurement reporting in RRC_CONNECTED may initiate the procedure when configured with application layer measurement, i.e. when *appLayerMeasConfig* and SRB4 have been configured by the network. | |
| Upon initiating the procedure, the UE shall: | |
| 1> for each measConfigAppLayerId: | |
| 2> if the UE AS has received application layer measurement report from upper layers which has not been transmitted; and | |
| 2> if the application layer measurement reporting has not been suspended for the *measConfigAppLayerId* associated with the application layer measurement report according to clause 5.3.5.13d: | |
| 3> set the *measReportAppLayerContainer* in the *MeasurementReportAppLayer* message to the received value in the application layer measurement report; | |
| 2> set the *measConfigAppLayerId* in the *MeasurementReportAppLayer* message to the value of the *measConfigAppLayerId* received together with application layer measurement report information; | |
| 2> if session start or stop information has been received from upper layers for the *measConfigAppLayerId:* | |
| 3> set the *appLayerSessionStatus* to the received value of the application layer measurement information; | |
| 2> if RAN visible application layer measurement report has been received from upper layers: | |
| 3> for each *appLayerBufferLevel* value in the received RAN visible application layer measurement report: | |
| 4> set the *appLayerBufferLevel* values in the *appLayerBufferLevelList* to the buffer level values received from the upper layer in the order with the first *appLayerBufferLevel* value set | |
| to the newest received buffer level value, the second *appLayerBufferLevel* value set to the second newest received buffer level value, and so on until all the buffer level values received from the upper layer have been assigned or the maximum number of values have been set according to *appLayerBufferLevel,* if configured; | |
| 3> set the *playoutDelayForMediaStartup* to the received value in the RAN visible application layer measurement report, if any; | |
| 3> for each PDU session ID value indicated in the received RAN visible application layer measurement report, if any: | |
| 4> set the *PDU-SessionID* field in the *pdu-SessionIdList* to the indicated PDU session ID value; | |
| 2> if the encoded RRC message is larger than the maximum supported size of one PDCP SDU specified in TS 38.323 [5]: | |
| 3> if the RRC message segmentation is enabled based on the field *rrc-SegAllowed* received in *appLayerMeasConfig*: | |
| 4> initiate the UL message segment transfer procedure as specified in clause 5.7.7; | |
| 3> else: | |
| 4> discard the RRC message; | |
| 2> else: | |
| 3> submit the *MeasurementReportAppLayer* message to lower layers for transmission upon which the procedure ends. | |

The base station 315 may transfer the measurement result report to a final server (trace collection entity (TCE) or measurement collection entity (MCE) 365) that collects measurement reports in operation 370.

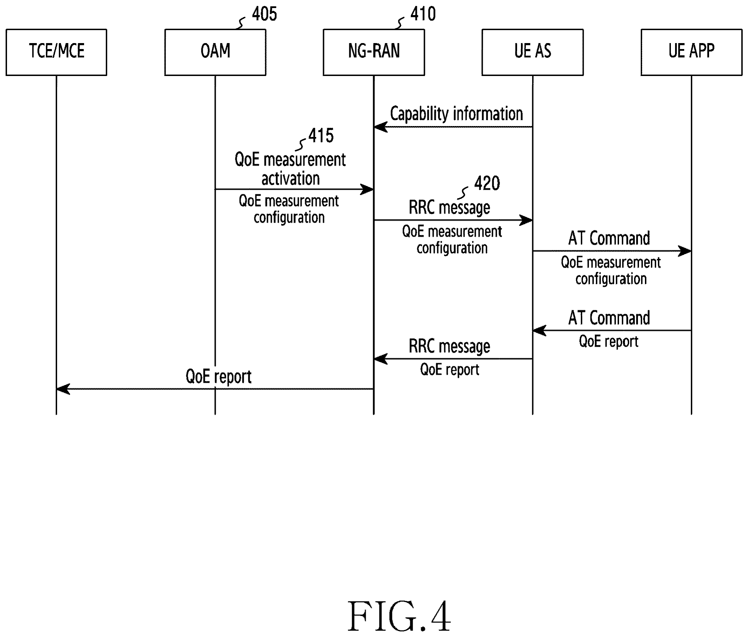

FIG. 4 is a flowchart illustrating a procedure of configuring/reporting management-based QoE measurement according to an embodiment of the disclosure.

The management-based QoE configuration/reporting procedure may be substantially similar to the signaling-based procedure that has been described with reference to FIG. 3. Therefore, only a difference from the above-described signaling-based procedure will be described in FIG. 4, and a description of procedures and descriptions overlapping with those in FIG. 3 will be omitted.

In the management-based method, an OAM 405 may directly transmit a QoE measurement configuration to a base station 410 without passing through a CN, so as to activate QoE measurement in operation 415. The base station 410 that receives the same may search for a single or a plurality of UEs that satisfies multiple conditions (e.g., area scope, application layer capability, and service type). The base station 410 may transfer the QoE measurement configuration to each of the corresponding UEs via an RRC message (e.g., RRCReconfiguration message or RRCResume) in operation 420. Each UE that receives the RRC message may receive and transmit the QoE measurement related configuration and a measurement result via an AT command between an AS layer and an APP, as described with reference to FIG. 3. In addition, the AS layer of the UE may report the measurement result obtained from the APP to the base station 410 via an RRC message, and the base station 410 may transfer the same to a TCE/MCE.

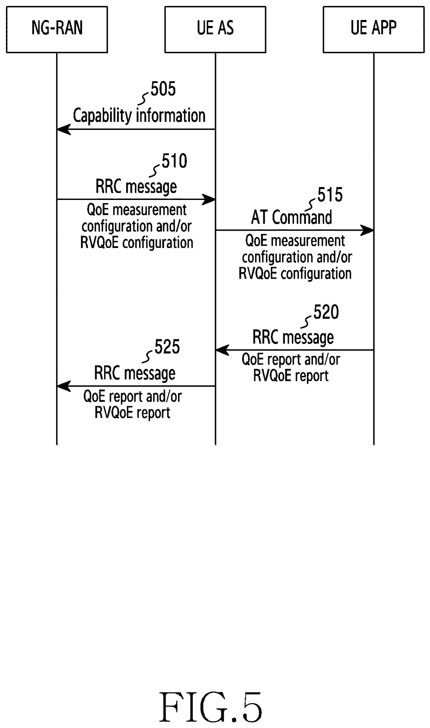

FIG. 5 is a flowchart illustrating a procedure of configuring and reporting RAN visible QoE measurement according to an embodiment of the disclosure.

According to the above-described method in FIG. 3 and 4, QoE measurement is configured by an OAM, and a QoE measurement report generated according to the configuration is collected by a TCE/MCE, and the QoE measurement report may be used by a service provider for network optimization. On the other hand, a base station may be incapable of reading or understanding the report regarding the OAM-based QoE measurement transmitted by a UE. More specifically, the measurement report generated by the application layer of the UE is included in measurementReportAppLayerContainer in a MeasurementReportAppLayer message, but since it is stored in an OCTET STRING form, the base station or the RRC layer of the base station is incapable of reading or understanding the same. In order to solve such a problem, that is, to allow the base station to read a QoE measurement report and to utilize the same in network optimization such as radio resource management, 3GPP may define and introduce RAN visible QoE (RVQoE) measurement.

RVQoE measurement may be defined only for a specific service type (e.g., streaming, VR). First, the UE may report, to the base station, whether RVQoE measurement is supported for each service type (e.g., streaming, VR) in operation 505. In this case, a UECapabilityInformation message may be used. For example, for a streaming service, the UE may include or configure a ran-VisibleQoE-Streaming-MeasReport parameter in a UECapabilityInformation message and transmit the same to the base station, and for a VR service, the UE may include or configure a ran-VisibleQoE-VR-MeasReport parameter in the UECapabilityInformation message and transmit the same to the base station.

Through this, the base station may identify whether the UE supports RVQoE measurement for each service type, and may generate an RVQoE measurement configuration based thereon and transmit the same to the UE in operation 510. In this instance, the RVQoE measurement configuration may be transferred together with an OAM-based QoE measurement configuration. The RVQoE measurement configuration may be included in an RRCReconfiguration or RRCResume message. The base station may indicate the setup or release of RVQoE measurement to the UE via configuration (setup) or release (release) of a ran-VisibleParameters parameter in an AppLayerMeasConfig IE. The parameter may include an RAN-VisibleParameters IE, and thus some or all of the following parameters may be provided from the base station to the UE. In the disclosure, the names of parameters (fields, information, etc.) described herein may be variously referred to in consideration of the characteristics of the information included in the corresponding parameters.
- RVQoE measurement report period (ran-VisiblePeriodicity): A UE AS or UE APP may transmit a RVQoE measurement report periodically based on an RVQoE measurement reporting period.
- Maximum number of reportable buffer levels (numberOfBufferLevelEntries): When reporting an RVQoE measurement, a UE AS or UE APP may include multiple buffer levels, and the number of buffer levels included may be less than or equal to the configured maximum number of reportable buffer levels.
- Whether to report playout delay for media startup (reportPlayoutDelayForMediaStartup): When a value is indicated as true, a UE AS or UE APP may include a playout delay for media startup in an RVQoE report for transmission. When the value is indicated as false, the UE may not include a playout delay for media start in the RVQoE report.

The AS layer of the UE may transfer the configuration information to the APP layer of the UE in operation 515. In this instance, the RVQoE measurement configuration may be transferred together with an OAM-based QoE measurement configuration. Based on RVQoE measurement configuration information, the APP of the UE may perform QoE measurement to generate a RVQoE measurement report and transmit the same to the AS layer of the UE in operation 520. In this instance, the RVQoE measurement report may be transferred together with the OAM-based QoE measurement report.

The AS layer of the UE that receives the same may transfer the transferred RVQoE measurement report to the base station in operation 525. In this instance, the RVQoE measurement report may be transferred together with the OAM-based QoE measurement report. In operation 525, the RVQoE measurement report may be transmitted via an RAN-VisibleMeasurements IE in the MeasurementReportAppLayer message, and the IE may include some or all of the following parameters.
- App layer's buffer level list (appLayerBufferLevelList): The buffer level list of an app layer may include a plurality of buffer levels measured by a UE APP. The number of buffer levels included may be limited due to numberOfBufferLevelEntries in the RVQoE configuration.
- playout delay (playoutDelayForMediaStartup): This parameter may indicate a playout delay for media startup in units of ms. When reportPlayoutDelayForMediaStartup is configured to true in the RVQoE configuration, the UE may include this parameter.
- PDU session ID list (pdu-SessionIdList): This parameter may indicate a PDU session(s) used for an application data flow that is a target of RVQoE measurement. The base station may identify for which PDU session(s) RVQoE values (e.g., buffer level and playout delay) are measured, and may accordingly optimize resource allocation and scheduling for the corresponding PDU session(s).

The base station may read a RVQoE report and perform network optimization using the same. For example, when the base station determines, based on the RVQoE report, that a predetermined UE is experiencing poor QoE for a predetermined service, the base station may allocate a larger amount of radio resource to the corresponding UE, thereby improving the QoE of the corresponding UE.

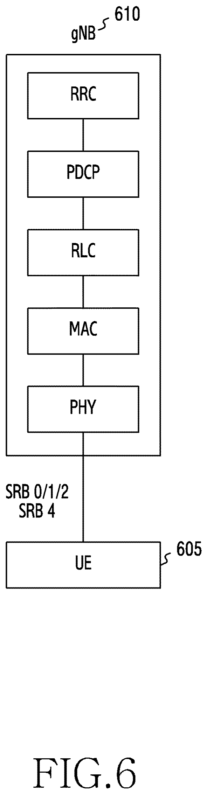

FIG. 6 is a diagram illustrating an SRB path in an SA situation according to an embodiment of the disclosure.

A UE may be connected to a network in a standalone (SA) state. That is, a UE 605 may communicate with one base station 610. In this instance, a signaling radio bearer (SRB) may be defined or used for transmission of an RRC message or a non-access stratum (NAS) message between the base station and the UE. In the SA state, for example, SRB0, SRB1, SRB2, and SRB4 may be configured/used. Here, SRB4 may be used for transmission of a QoE measurement report message (or App layer measurement report message) of the UE.

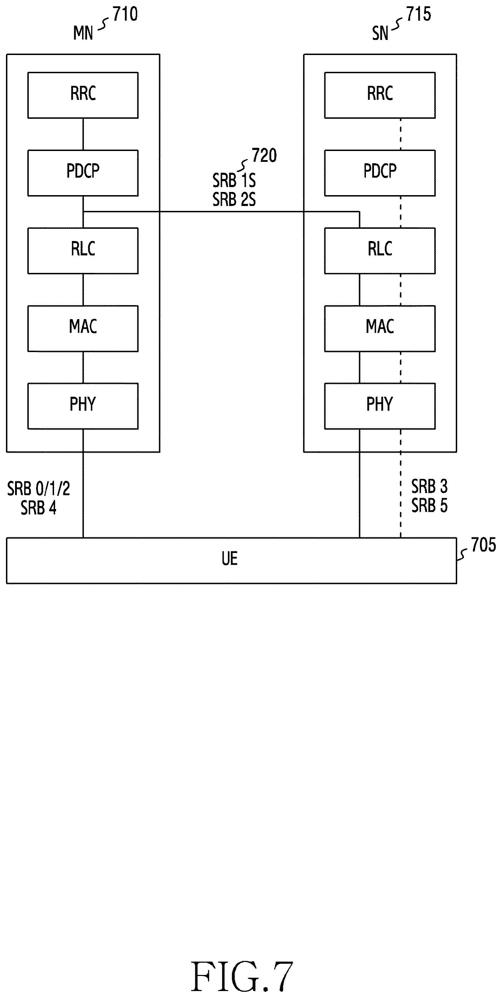

FIG. 7 is a diagram illustrating an SRB path in a DC situation according to an embodiment of the disclosure.

A UE may be connected to a network in a dual connectivity (NR-DC) state. That is, in a state in which a UE 705 establishes a connection with each of two base stations 710 and 715, the UE 705 may communicate with the two base stations at the same time. Each base station may be referred to as a master node (MN) 710 or a secondary node (SN) 715. In this case, a signaling radio bearer (SRB) may be defined/used for RRC message or NAS message transmission between the base station and the UE. Here, SRB0, SRB1, SRB2, and SRB4 may be configured/used for communication between the UE and the MN. In addition, SRB4 may be used for transmission of a QoE measurement report message (or App layer measurement report message) of the UE. Among these, SRB1 and SRB2 may be configured as split SRBs 720, and a split SRB may support communication between the UE and the MN through the MN's RRC/packet data convergence protocol (PDCP) layer and the SN's radio link control (RLC)/medium access control (MAC)/PHY layer. The base station may configure an SRB path for communication with the UE by using the split SRB. For example, the base station may configure whether to use an RLC/MAC/PHY layer of the MN, an RLC/MAC/PHY layer of the SN, or both. If the RLC/MAC/PHY layers of the MN and the SN are all used (duplication), the reliability of transmission may be increased via duplicate transmission of a packet. Meanwhile, SRB3 and SRB5 may be configured/used for communication between the UE and the SN.

The UE may also need to have SRB configuration with the SN as well as the MN for transmission of a QoE measurement report message. The UE may use SRB4 to transmit a QoE measurement report message to the MN (RRC layer of MN). Alternatively, the UE may define/use Split SRB4 to transmit a QoE measurement report message to the MN (RRC layer of MN). In this instance, the QoE measurement report message may be transferred to the MN's PDCP/RRC layer via the SN's PHY/MAC/RLC layer. Alternatively, the UE may use SRB3 to transmit a QoE measurement report message to the SN (RRC layer of SN). The QoE measurement report message may be a message having a lower priority than an RRC message transmitted via existing SRB3. This is because QoE reports may be used for optimizing network operation but may not be essential for network operation. Therefore, to transmit the QoE measurement report message to the SN (RRC layer of SN), a new SRB (e.g., SRB5 having a lower priority than SRB3) may be defined/used. SRB5 may connect to the RRC layer of the SN via the PHY/MAC/RLC/PDCP layer of the SN, in the same manner as SRB3.

In order to receive QoE configuration information from the MN (RRC layer of MN), the UE may be configured with SRB1 (or split SRB1) and may use the same. In addition, the UE may be configured with SRB3 in order to receive QoE configuration information from the SN (RRC layer of SN) and may use the same. Alternatively, the UE may receive the QoE configuration information in the form in which an SN message (including SN QoE configuration information) is included in an SRB1 message.

According to an embodiment of the disclosure, the UE in the NR-DC state may receive, from the network, an indication regarding a reporting leg (e.g., whether to transmit to MN or SN, or whether to use SRB4 or SRB5) to be used for QoE measurement reporting. The UE may transmit a QoE measurement report to the base station by using the indicated reporting leg.

Although the embodiment of the disclosure has been described under the assumption of NR-DC, the same method may be applied to various types of DC situations (e.g., multi-radio access technology (RAT)-DC (MR-DC)).

According to an embodiment of the disclosure, the MN or MCG may transmit a QoE configuration to the UE via SRB1, and the SN or SCG may transmit a QoE configuration to the UE via SRB3.

As an embodiment of the disclosure, the MN or MCG may transfer a QoE configuration (e.g., in an encapsulated message form) to the SN or SCG, and the SN or SCG may configure the same for the UE via SRB3.

According to an embodiment of the disclosure, the SN or SCG may transfer (e.g., in an encapsulated message form) a QoE configuration to the MN or MCG, and the MN or MCG may configure the same for the UE via SRB1.

In an embodiment of the disclosure, the UE may transmit a QoE measurement report to the MN or MCG via SRB4, and may transmit a QoE measurement report to the SN or SCG via SRB5.

According to an embodiment of the disclosure, the UE may transmit a QoE measurement report to the MN or MCG via SRB4, and the MN or MCG that receives the same may transmit the same to a TCE or MCE (via a CN).

According to an embodiment of the disclosure, the UE may transmit a QoE measurement report to the MN or MCG via SRB4, and the MN or MCG that receives the same may transmit the same to the SN or SCG (e.g., in an encapsulated message form).

According to an embodiment of the disclosure, the UE may transmit a QoE measurement report to the SN or SCG via SRB5, and the SN or SCG that receives the same may transmit the same to a TCE or MCE (via a CN).

According to an embodiment of the disclosure, the UE may transmit a QoE measurement report to the SN or SCG via SRB5, and the SN or SCG that receives the same may transmit the same to the MN or MCG (e.g., in an encapsulated message form).

According to an embodiment of the disclosure, if the size of a QoE measurement report message (e.g., MeasurementReportAppLayer message) generated (encoded) for QoE measurement reporting is greater than the maximum PDCP SDU size supported in the PDCP layer, the UE may perform uplink (UL) RRC segmentation on the QoE measurement report message. That is, the UE RRC layer may divide the encoded QoE measurement report message into multiple segments, include each segment in a container (e.g., rrc-MessageSegmentContainer) in a segment message (e.g., ULDedicatedMessageSegment message), and transmit the same to the PDCP layer so that each segment message may be processed/transmitted in the PDCP layer.

According to an embodiment of the disclosure, when reporting a UE capability message to the base station (e.g., 310), the UE may report, to the base station, the fact that it supports UL RRC segmentation for a QoE measurement report message (e.g., MeasurementReportAppLayer message). For example, the UE may include an ul-MeasurementReportAppLayer-Seg indicator in the UE capability message, thereby indicating to the base station that the UE supports UL RRC segmentation for a QoE measurement report message. Alternatively, the UE may indicate, to the base station, that UL RRC segmentation is not supported for a QoE measurement report message by not including the ul-MeasurementReportAppLayer-Seg indicator in the UE capability message.

According to an embodiment of the disclosure, (e.g., after receiving a report that the UE supports UL RRC segmentation) the base station may allow or configure UL RRC segmentation for the UE via a QoE measurement configuration (e.g., 340). For example, the base station may indicate, to the UE, that UL RRC segmentation is allowed by including an rrc-SegAllowed indicator in the QoE measurement configuration, and may indicate, to the UE, that UL RRC segmentation is not allowed by omitting the indicator.

According to an embodiment of the disclosure, the UE may perform uplink (UL) RRC segmentation on a QoE measurement report message if some or all of the following conditions are satisfied.
1) If the size of a QoE measurement report message (e.g., MeasurementReportAppLayer message) generated (encoded) by the UE for QoE measurement reporting is larger than the maximum PDCP SDU size supported in the PDCP layer.
2) If the UE supports UL RRC segmentation.
3) If the base station allows the UE to perform UL RRC segmentation.

If the UE satisfies condition 1) but does not satisfy condition 2) and/or condition 3), the UE may delete or discard a QoE measurement report.

According to an embodiment of the disclosure, although a reporting leg is indicated to the UE by the base station, but UL RRC segmentation with regard to the indicated leg may not be allowed. For example, although the reporting leg is indicated as the MN or SRB4 to the UE by the base station (MN or SN), UL RRC segmentation for QoE measurement reporting to the MN or via SRB4 may not be allowed. As an opposite example, although the reporting leg is indicated as the SN or SRB5 to the UE by the base station (MN or SN), UL RRC segmentation for QoE measurement reporting to the SN or via SRB5 may not be allowed. In this instance, if the size of the QoE measurement report message (e.g., MeasurementReportAppLayer message) generated (encoded) by using a QoE measurement report (e.g., 355) received from a UE APP is larger than the maximum PDCP SDU size supported in the PDCP layer, a UE AS may be incapable of transmitting the QoE measurement report message to the base station, and may delete or discard the same.

However, deletion of the QoE measurement report may be a loss of a QoE or RVQoE measurement report. That is, QoE information measured (using a computing resource) in the UE APP is not transmitted to a TCE/MCE and the base station, and thus the QoE information may not be used for network optimization. To solve the problem, according to an embodiment of the disclosure, the UE may perform QoE measurement reporting using RRC segmentation by using a leg (e.g., leg 2) other than the indicated reporting leg (e.g., leg 1). To this end, the UE may satisfy some or all of the following conditions.
1) If the size of a QoE measurement report message (e.g., MeasurementReportAppLayer message) generated (encoded) by the UE for QoE measurement reporting is larger than the maximum PDCP SDU size supported in the PDCP layer.
2) If the UE is not allowed, by the base station, to perform UL RRC segmentation for QoE measurement reporting using an indicated reporting leg (e.g., leg 1).
3) If the UE is allowed, by the base station, to perform UL RRC segmentation for QoE measurement reporting using leg 2.
4) If the UE receives, from the base station, an indication of using, or is allowed to use, a leg (e.g., leg 2) other than the indicated reporting leg (e.g., leg 1).

For example, although conditions 1) and 2) are satisfied, if condition 3) or 4) is not satisfied, the UE may not transmit the corresponding QoE measurement report message to the base station, and may delete or discard the same.

According to an embodiment of the disclosure, if the UE performs QoE measurement reporting using a leg (e.g., leg 2) other than the indicated reporting leg (e.g., leg 1), the UE may transmit, to the base station, a reason (cause value) for using leg 2 rather than leg 1. For example, if the size of a QoE measurement report message (e.g., MeasurementReportAppLayer message) generated (encoded) for reporting is larger than the maximum PDCP SDU size supported in the PDCP layer, the UE may indicate the fact that RRC segmentation is not allowed in leg 1, and leg 2 is to be used. This is because the base station may not know the reason why the UE uses leg 2, not leg 1 that is indicated, and thus, it is necessary to inform the base station of this.

According to an embodiment of the disclosure, the UE may request the base station to change a reporting leg (e.g., from leg 1 to leg 2) or send the UE's preference to the base station. For example, if RRC segmentation is not allowed in the indicated reporting leg (e.g., leg 1) and the UE discards or deletes a QoE measurement report larger than the maximum PDCP SDU size supported in the PDCP layer, the UE may request the base station to change the reporting leg (e.g., from leg 1 to leg 2) or send its preference to the base station. The UE may include this in a UE assistance information (UAI) message or a QoE measurement report message and transmit the same. The base station may change the reporting leg after receiving the same. In the case of using a UE assistance information (UAI) message, the base station may configure a prohibit timer to prevent the UE from frequently transmitting a request or preference. Only when the UE receives configuration information (e.g., prohibit timer length) regarding a reporting leg change request from the base station, the UE may recognize that a reporting leg change request is allowed/configured, and transmit a reporting leg change request to the base station.

According to an embodiment of the disclosure, the UE AS may receive an indication regarding a change of a reporting leg from the base station while transmitting a QoE measurement report using RRC segmentation. This is because the base station may not be aware of the fact that the UE is in the middle of transmission using RRC segmentation.

According to an embodiment of the disclosure, in a state in which the UE AS (RRC layer) generates a QoE measurement report message for which RRC segmentation is not performed (RRC segmentation is not required) and not yet transmit the same to a lower layer, or the same is transmitted or submitted to the lower layer but successful transmission (e.g., using leg 1) of the message is not confirmed by the lower layer, if the UE receives an indication associated with a change of a reporting leg (e.g., from leg 1 to leg 2) from the base station, the UE AS may (re)transmit the QoE measurement report message for which RRC segmentation is not performed, by using a newly indicated reporting leg (e.g., leg 2), and may transmit or submit the same to the lower layer for this purpose.

According to an embodiment of the disclosure, in the case in which the UE AS (RRC layer) receives an indication regarding a change of a reporting leg (e.g., from leg 1 to leg 2) from the base station while performing an RRC segmentation-related operation for transmission of a QoE measurement report message, if RRC segmentation for leg 2 is allowed, the UE may transmit all segment messages (from first segment message to last segment message) corresponding to the QoE measurement report message by using a new reporting leg (e.g., leg 2). Even when the UE RRC layer transmits some segment messages to the lower layer via leg 1, or successful transmission is confirmed by the lower layer, the UE may transmit all segment messages (from first segment message to last segment message) by using the new reporting leg (e.g., leg 2). In this instance, the UE may transmit some segment messages via leg 1 and also transmit the same via leg 2, thereby causing a waste of resources due to redundant transmission. However, a node (MN or SN) (e.g., node 1) that receives the UE's QoE measurement report by using leg 1 may be incapable of transmitting the received some segment messages to a node (SN or MN) (e.g., node 2) that performs reception using leg 2, and thus the UE may perform transmission from a first segment to node 2 using leg 2. In addition, although the UE RRC layer transmits some segment messages to the lower layers for transmission to leg 1, the UE may not be able to guarantee that the segment messages are to be successfully transmitted to node 1 at the time (the point in time at which the UE RRC layer receives an indication of a change of a reporting leg from the base station while performing an RRC segmentation-related operation for transmission of a QoE measurement report message). Therefore, the UE may perform transmission from the first segment to node 2 by using leg 2.

According to an embodiment of the disclosure, in order to prevent a waste of resources due to the redundant transmission described above, if an indication regarding a change of a reporting leg (e.g., a change from leg 1 to leg 2) is received from the base station while the UE AS (RRC layer) is performing an RRC segmentation-related operation for transmission of a QoE measurement report message, and RRC segmentation for leg 2 is allowed, the UE may transmit only a segment message(s) which is not transmitted to the lower layer or for which successful transmission is not confirmed by the lower layer by using a new reporting leg (e.g., leg 2), excluding a segment message(s) is transmitted to the lower layer by using an existing reporting leg (e.g., leg 1) or for which successful transmission is confirmed by the lower layer. For the operation in this embodiment, when the network indicates a reporting leg to the UE (e.g., through negotiation between the MN and the SN), node 2 may request node 1 to transmit segment message(s) received so far to node 2. Upon receiving such a request, or even without receiving the same, node 1 may transmit the segment message(s) received so far to node 2 (e.g., via Xn interface). As a result, node 2 may combine the segment message(s) received from node 1 and the segment message(s) received from the UE using leg 2, and may restore (assemble) an original QoE measurement report message. As another embodiment, node 1 instead of node 2 may collect all segment messages and assemble the original QoE measurement report message. That is, node 1 may store the received segment message(s), and node 2 may receive the remaining segment message(s) (up to last segment message) by using leg 2 and then transfer the same to node 1 (e.g., via Xn interface). Node 1 may collect all the segment messages, and assemble the original QoE measurement report message.

According to an embodiment of the disclosure, in order to prevent a waste of resources due to redundant transmission, if the network indicates, to the UE, a change of a reporting leg (e.g., from leg 1 to leg 2) and allows the UE to perform RRC segmentation for leg 2 while the UE AS (RRC layer) is performing an RRC segmentation-related operation for transmission of a QoE measurement report message, the network (node 1 or node 2) may indicate, to the UE, the sequence number of a last segment message (e.g., segment sequence number (segmentNumber)) successfully received via leg 1 so far. Alternatively, the network may indicate, to the UE, a sequence number of a segment message to be transmitted first via leg 2 (e.g., by indicating a segment sequence number (segmentNumber)). The UE that receives the indication may sequentially transmit segment messages from a segment message after the segment message successfully transmitted via leg 1 or from the indicated segment message, via leg 2 in accordance with sequence numbers.

According to an embodiment of the disclosure, if the UE AS (RRC layer) receives, from the base station, an indication of a change of a reporting leg (e.g., from leg 1 to leg 2) while performing an RRC segmentation-related operation for transmission of a QoE measurement report message, and if RRC segmentation for leg 2 is not allowed, all (remaining) segment messages corresponding to the QoE measurement report message may be deleted.

According to an embodiment of the disclosure, if the UE AS (RRC layer) receives an indication regarding a change of a reporting leg (e.g., change from leg 1 to leg 2) from the base station while performing an RRC segmentation-related operation for transmission of a QoE measurement report message, and if RRC segmentation for leg 2 is not allowed, the UE may operate by referring to the above-described embodiment. For example, even though leg 2 is indicated, the UE may autonomously select leg 1 for which RRC segmentation is allowed, and perform QoE measurement reporting. For example, a request for a change of the reporting leg may be made to the base station.

According to an embodiment of the disclosure, if configuration of a secondary cell group (SCG) is released or deactivated during a process in which the UE transmits a QoE measurement report using RRC segmentation via SRB5 (to the SN) (e.g., a state in which a reporting leg is indicated as the SN or SRB5), and if the UE is allowed to perform RRC segmentation for SRB4 or the MN, the UE may stop transmission of a segment message for the QoE measurement report message and store the same. This may have a purpose of temporarily storing the same so that the UE transmits the same to the MN when the base station changes the reporting leg later, or alternatively, a purpose of temporarily storing the same so that the UE transmits the same to the SN when the base station (re)activates the SCG later.

In the former case, when the base station changes the reporting leg to the MN or SRB4, the UE may transmit all segment messages corresponding to the QoE measurement report message to the MN according to the preceding embodiment, or may transmit only a portion of the segment messages (that is not transmitted to the lower layer or for which successful transmission is not confirmed by the lower layer). The related detailed contents of the disclosure may refer to the above-described embodiment.

According to an embodiment of the disclosure, if configuration of a secondary cell group (SCG) is released or deactivated during a process in which the UE transmits a QoE measurement report using RRC segmentation via SRB5 (to the SN) (e.g., a state in which a reporting leg is indicated as the SN or SRB5), and if the UE is allowed to perform RRC segmentation for SRB4 or the MN, the UE may operate by referring to the above-described embodiment. For example, even though the reporting leg is indicated as the SN or SRB5, it may autonomously change the reporting leg to the MN or SRB4 for which RRC segmentation is allowed, to perform QoE measurement reporting. For example, a request for a change of the reporting leg may be made to the base station.

According to an embodiment of the disclosure, if configuration of a secondary cell group (SCG) is released or deactivated during a process in which the UE transmits a QoE measurement report using RRC segmentation via SRB5 (to the SN) (e.g., a state in which a reporting leg is indicated as the SN or SRB5), and if the UE is not allowed to perform RRC segmentation for SRB4 or MN, the UE may delete or discard all (remaining) segment messages.

According to an embodiment of the disclosure, a reporting leg may be separately defined for measurement reporting of a RAN visible QoE (RVQoE). For example, the base station may configure one reporting leg for the UE for encapsulated QoE measurement reporting (which is not RVQoE QoE measurement reporting, but existing QoE measurement reporting using a container), and may also configure a separate reporting leg for RVQoE measurement reporting. According to an embodiment of the disclosure, the base station may indicate a different leg for each reporting leg, but may also indicate a common leg. According to an embodiment of the disclosure, each reporting leg may be configured by a different node (MN or SN), but one node may configure both reporting legs. According to an embodiment of the disclosure, negotiation between the MN and the SN may be performed to configure each reporting leg.

Using a reporting leg for encapsulated QoE measurement reporting, the UE RRC may perform reporting to the base station by including some or all of the following parameters.
1) QoE configuration or measurement ID (e.g., measConfigAppLayerId)
2) A container including a QoE measurement report (e.g., measReportAppLayerContainer)
3) A parameter indicating the start or end of a QoE measurement session (e.g., appLayerSessionStatus)

Using a reporting leg for RVQoE measurement reporting, the UE RRC may perform reporting to the base station by including some or all of the following parameters.
1) QoE configuration or measurement ID (e.g., measConfigAppLayerId)
2) Parameters including an RVQoE measurement report (e.g., ran-VisibleMeasurements, appLayerBufferLevelList, playoutDelayForMediaStartup, pdu-SessionIdList)
3) A parameter indicating the start or end of a QoE measurement session (e.g., appLayerSessionStatus)

If a reporting leg for RVQoE measurement reporting is not configured, or if a reporting leg for encapsulated QoE measurement reporting and the reporting leg for RVQoE measurement reporting indicate a common leg, the UE may perform reporting to the base station by including some or all of the following parameters.
1) QoE configuration or measurement ID (e.g., measConfigAppLayerId)
2) A container including a QoE measurement report (e.g., measReportAppLayerContainer)
3) A parameter indicating the start or end of a QoE measurement session (e.g., appLayerSessionStatus)
4) A parameter including an RVQoE measurement report (e.g., ran-VisibleMeasurements, appLayerBufferLevelList, playoutDelayForMediaStartup, pdu-SessionIdList)

According to an embodiment of the disclosure, the base station may provide indicator A to the UE in order to indicate a reporting leg for RVQoE measurement reporting to the UE. Indicator A may be included in a QoE configuration or an RVQoE configuration (e.g., 420 or 510). Indicator A may be configured for each QoE configuration ID (with a different value). If indicator A is not provided to the UE, a reporting leg for encapsulated QoE measurement reporting may be used for RVQoE measurement reporting. If the UE receives indicator A configured to value 1 (e.g., "otherLeg"), a leg other than the reporting leg for encapsulated QoE measurement reporting may be used for RVQoE measurement reporting (of a corresponding QoE configuration ID). If the UE receives indicator A configured to value 2 (e.g., "bothLeg"), the UE may transmit an RVQoE measurement report (of the corresponding QoE configuration ID) to both the MN and the SN. This is because both the MN and the SN may be interested in RVQoE measurement (of the corresponding QoE configuration ID). For example, in order to provide a VR service of a corresponding application to a UE, the MN and the SN may configure a bearer at the same time and provide a service together. According to an embodiment, indicator A may be provided to the UE by one of the MN and the SN through negotiation between the two nodes.

According to an embodiment of the disclosure, the base station may provide indicator B to the UE to indicate a reporting leg for RVQoE measurement reporting to the UE. Indicator B may be included in a QoE configuration or RVQoE configuration (e.g., 420 or 510). Indicating B may be configured for each QoE configuration ID (with a different value). If the UE receives indicator B from the MN, the UE may transmit a corresponding RVQoE report to the MN (via SRB4) (which means that a reporting leg for RVQoE measurement reporting is the MN or SRB4). The MN may directly transmit indicator B via SRB1 or may transfer the same to the UE in the form of an encapsulated message via SRB3 by passing through the SN. If the UE receives indicator B from the SN, the UE may transmit a corresponding RVQoE report to the SN (via SRB5) (which means that the reporting leg for RVQoE measurement reporting is the SN or SRB5). The SN may transmit indicator B directly via SRB3 or may transfer the same in the form of an encapsulated message to the UE via SRB1 by passing through the MN.

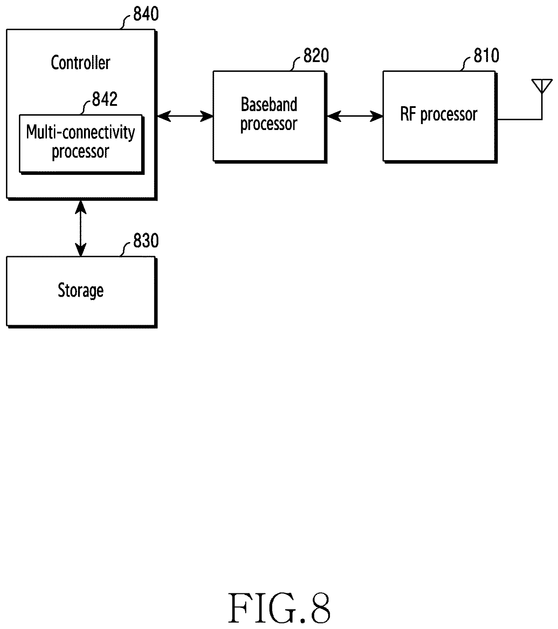

FIG. 8 is a block diagram illustrating an internal structure of a UE, which is applied to embodiments of the disclosure.

Referring to FIG. 8, the UE may include a radio frequency (RF) processor 810, a baseband processor 820, a storage 830, and a controller 840. The structure of the UE is not limited to the exemplary structure illustrated in FIG. 8, and the UE may include a larger or smaller number of components than those illustrated in FIG. 8.

The RF processor 810 may perform a function for transmitting and receiving a signal via a wireless channel, such as band conversion and amplification of the signal. That is, the RF processor 810 may up-convert a baseband signal provided from the baseband processor 820 to an RF band signal, may transmit the same through an antenna, and may down-convert an RF band signal received through the antenna to a baseband signal. For example, the RF processor 810 may include a transmission filter, a reception filter, an amplifier, a mixer, an oscillator, a digital-to-analog converter (DAC), an analog-to-digital converter (ADC), and the like. Although only one antenna is illustrated in the drawing, the UE may include multiple antennas. In addition, the RF processor 810 may include multiple RF chains. Furthermore, the RF processor 810 may perform beamforming. For the beamforming, the RF processor 810 may adjust the phase and magnitude of each of signals transmitted and received through multiple antennas or antenna elements. In addition, the RF processor may perform MIMO, and may receive multiple layers when performing a MIMO operation. The RF processor 810 may appropriately configure multiple antennas or antenna elements to perform reception beam sweeping or may adjust the direction and beam width of a reception beam so as to resonate the reception beam with a transmission beam under the control of the controller.

The baseband processor 820 may perform functions of conversion between baseband signals and bitstrings according to the system's physical layer specifications. For example, in case of data transmission, the baseband processor 820 may encode and modulate a transmitted bitstring to generate complex symbols. In addition, during data reception, the baseband processor 820 may restore the received bit stream through demodulation and decoding of the baseband signal provided from the RF processor 810. For example, when following the orthogonal frequency division multiplexing (OFDM) scheme, during data transmission, the baseband processor 820 may encode and modulate a transmitted bitstring to generate complex symbols, may map the complex symbols to subcarriers, and may configure OFDM symbols through an inverse fast Fourier transform (IFFT) operation and cyclic prefix (CP) insertion. In addition, in case of data reception, the baseband processor 820 may split a baseband signal provided from the RF processor 810 at the OFDM symbol level, may restore signals mapped to subcarriers through a fast Fourier transform (FFT) operation, and may restore a received bitstring through demodulation and decoding.

According to an embodiment of the disclosure, the baseband processor 820 and the RF processor 810 may transmit and receive a signal as described above. Therefore, the baseband processor 820 and the RF processor 810 may be referred to as a transmitter, a receiver, a transceiver, or a communication unit. Furthermore, at least one of the baseband processor 820 and the RF processor 810 may include multiple communication modules to support multiple different radio access technologies. In addition, at least one of the baseband processor 820 and the RF processor 810 may include different communication modules to process signals in different frequency bands. For example, the different radio access technologies may include a wireless LAN (e.g., IEEE 802.11), a cellular network (e.g., LTE), and the like. In addition, the different frequency bands may include super high frequency (SHF) (e.g., 2NRHz) bands and millimeter wave (mmWave) (e.g., 60GHz) bands.

According to an embodiment of the disclosure, the storage 830 may store basic programs, application programs, and data, such as configuration information, for operation of the main base station. Particularly, the storage 830 may store information regarding a second access node configured to perform wireless communication by using a second radio access technology. In addition, the storage 830 provides the stored data at the request of the controller 840. Furthermore, the storage 830 may store programs for performing the method according to the disclosure.

The controller 840 controls the overall operation of the UE. For example, the controller 840 may transmit/receive signals through the baseband processor 820 and the RF processor 810. In addition, the controller 840 records data in the storage 830 and reads the data from the storage 830. To this end, the controller 840 may include at least one processor. For example, the controller 840 may include a communication processor (CP) that performs control for communication and an application processor (AP) that controls upper layers such as application programs, and may include a multi-connectivity processor 842 as illustrated in the drawing.

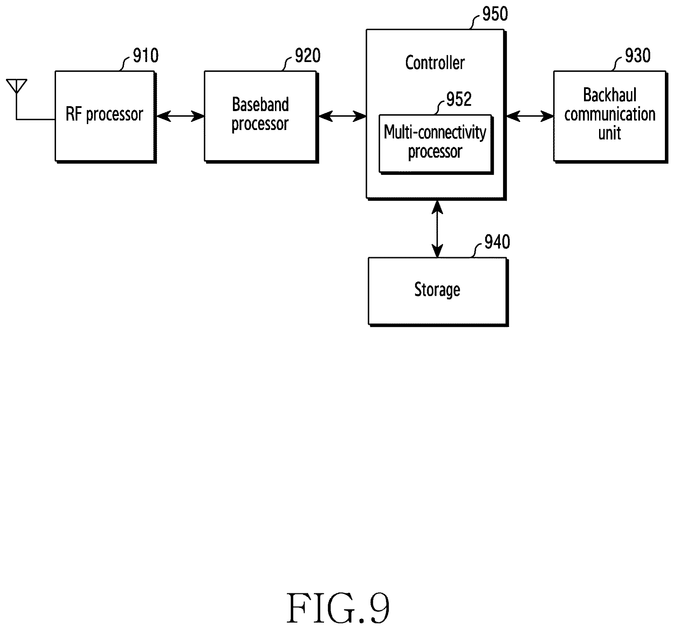

FIG. 9 is a block diagram illustrating a structure of a base station, which is applied to embodiments of the disclosure.

Referring to FIG. 9, the base station may include an RF processor 910, a baseband processor 920, a backhaul communication unit 930, a storage 940, and a controller 950. The structure of the base station is not limited to the exemplary structure illustrated in FIG. 9, and the base station may include a larger or smaller number of components than those illustrated in FIG. 9. Also, according to an embodiment of the disclosure, a network entity may have the same or like structure as the base station in FIG. 9. For example, the AMF entity may have the same or like structure as the base station in FIG. 9.

According to an embodiment, the RF processor 910 may perform functions for transmitting/receiving signals through a radio channel, such as signal band conversion and amplification. That is, the RF processor 910 may up-convert a baseband signal provided from the baseband processor 920 to an RF band signal, may transmit the same through an antenna, and may down-convert an RF band signal received through the antenna to a baseband signal. For example, the RF processor 910 may include a transmission filter, a reception filter, an amplifier, a mixer, an oscillator, a DAC, and an ADC. Although only one antenna is illustrated in the drawing, the base station may include multiple antennas. In addition, the RF processor 910 may include multiple RF chains. Furthermore, the RF processor 910 may perform beamforming. For the beamforming, the RF processor 910 may adjust the phase and magnitude of each of signals transmitted and received through multiple antennas or antenna elements. The RF processor may transmit one or more layers to perform a downward MIMO operation.

According to an embodiment, the baseband processor 920 may perform a function of conversion between a baseband signal and a bitstring according to the physical layer specifications of radio access technology. For example, during data transmission, the baseband processor 920 may encode and modulate a transmitted bitstring to generate complex symbols. In addition, during data reception, the baseband processor 920 may restore the received bit stream through demodulation and decoding of the baseband signal provided from the RF processor 910. For example, when following the OFDM scheme, during data transmission, the baseband processor 920 may encode and modulate a transmitted bitstring to generate complex symbols, may map the complex symbols to subcarriers, and may configure OFDM symbols through IFFT operation and CP insertion. In addition, during data reception, the baseband processor 920 may split a baseband signal provided from the RF processor 910 at the OFDM symbol level, may restore signals mapped to subcarriers through FFT operation, and may restore a received bitstring through demodulation and decoding. The baseband processor 920 and the RF processor 910 may transmit and receive signals as described above. Therefore, the baseband processor 920 and the RF processor 910 may be referred to as a transmitter, a receiver, a transceiver, a communication unit, or a wireless communication unit.

According to an embodiment of the disclosure, the backhaul communication unit 930 may provide an interface for communicating with other nodes in the network. That is, the backhaul communication unit 930 may convert bitstrings transmitted from the main base station to other nodes (for example, auxiliary base station, core network) to physical signals, and may convert physical signals received from the other nodes to bitstrings.

According to an embodiment of the disclosure, the storage 940 may store basic programs, application programs, and data, such as configuration information, for the operation of the main base station. In particular, the storage 940 may store information on bearers allocated to the connected UE, measurement results reported from the connected UE, and the like. In addition, the storage 940 may store information serving as a criterion to determine whether to provide multi-connectivity to a UE or to suspend the same. In addition, the storage 940 provides the stored data at the request of the controller 950. According to an embodiment, the storage 940 may store programs for performing the method according to the disclosure.

The controller 950 controls the overall operation of the base station. For example, the controller 950 may transmit/receive signals through the baseband processor 920 and the RF processor 910 or through the backhaul communication unit 930. In addition, the controller 950 records data in the storage 940 and reads the data from the storage 940. To this end, the controller 950 may include at least one processor, and may include a multi-connectivity processor 952 as illustrated in the drawing.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the disclosure, the term "computer program product" or "computer readable medium" is used to generally refer to a medium such as a memory, a hard disk installed in a hard disk drive, or a signal. The "computer program product" or "computer readable medium" is an element that is provided to a method for reporting UE capability in a wireless communication system according to the disclosure.

The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium. As an example, the "non-transitory storage medium" may include a buffer in which data is temporarily stored

According to an embodiment, methods according to various embodiments of the disclosure may be included and provided in a computer program product. The computer program product may be traded as a product between a seller and a purchaser. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least a part of the computer program product (e.g., a downloadable app) may be temporarily generated or at least temporarily stored in the machine-readable storage medium, such as memory of the manufacturer's server, a server of the application store, or a relay server.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. In addition, the embodiments of the disclosure may also be applied to other communication systems and other variants based on the technical idea of the embodiments may also be implemented. For example, the embodiments may be applied to LTE, 5G, NR, or 6G systems. Therefore, the scope of the disclosure should not be defined as being limited to the embodiments set forth herein, but should be defined by the appended claims and equivalents thereof.

## Claims

1. A method performed by a terminal in a wireless communication system, the method comprising:
receiving, from a base station, a message including configuration information regarding a quality of experience (QoE); and
based on the configuration information, transmitting a message for reporting a QoE measurement result;
wherein the configuration information includes information indicating a first signaling radio bearer (SRB) for an encapsulated QoE measurement report and information indicating a second SRB for a radio access network (RAN) visible QoE measurement report.

2. The method of claim 1, wherein, in case that the first SRB and the second SRB are identical, the message for reporting the QoE measurement result is transmitted via the first SRB or second SRB, and
wherein the message for reporting the QoE measurement result includes at least one of identifier information for the configuration information, container information for the encapsulated QoE measurement report, information indicating a start or end of a QoE measurement session, and information on the RAN visible QoE measurement report.

3. The method of claim 1, wherein, in case that the first SRB and the second SRB are different, the transmitting of the message for reporting the QoE measurement result comprises:
transmitting a first message for the encapsulated QoE measurement report via the first SRB; and
transmitting a second message for the radio access network (RAN) visible QoE measurement report via the second SRB.

4. The method of claim 3, wherein the first message includes at least one of identifier information for the configuration information, container information for the encapsulated QoE measurement report, and information indicating a start or end of a QoE measurement session,
wherein the second message includes identifier information for the configuration information and information on the RAN visible QoE measurement report, and
wherein the base station includes a master base station or a secondary base station of new radio dual connectivity (NR-DC).

5. A method performed by a base station in a wireless communication system, the method comprising:
transmitting, to a terminal, a message comprising configuration information regarding a quality of experience (QoE); and
receiving, from the terminal, a message for reporting a QoE measurement result based on the configuration information,
wherein the configuration information includes information indicating a first signaling radio bearer (SRB) for an encapsulated QoE measurement report and information indicating a second SRB for a radio access network (RAN) visible QoE measurement report.

6. The method of claim 5, wherein, in case that the first SRB and the second SRB are identical, the message for reporting the QoE measurement report is received via the first SRB or the second SRB, and
wherein the message for reporting the QoE measurement result includes at least one of identifier information for the configuration information, container information for the encapsulated QoE measurement report, information indicating a start or end of a QoE measurement session, and information on the RAN visible QoE measurement report.

7. The method of claim 5, wherein, in case that the first SRB and the second SRB are different, the receiving of the message for reporting the QoE measurement result comprises:
receiving a first message for the encapsulated QoE measurement report via the first SRB, or receiving a second message for the RAN visible QoE measurement report via the second SRB.

8. The method of claim 7, wherein the first message includes at least one of identifier information for the configuration information, container information for the encapsulated QoE measurement report, and information indicating a start or end associated with a QoE measurement session, and
wherein the second message includes identifier information for the configuration information and information on the RAN visible QoE measurement report.

9. A terminal in a wireless communication system, the terminal comprising:
a transceiver; and
a controller connected to the transceiver,
wherein the controller is configured to:
receive, from a base station, a message comprising configuration information regarding a quality of experience (QoE); and
based on the configuration information, transmit a message for reporting a QoE measurement result, and
wherein the configuration information includes information indicating a first signaling radio bearer (SRB) for an encapsulated QoE measurement report and information indicating a second SRB for a radio access network (RAN) visible QoE measurement report.

10. The terminal of claim 9, wherein, in case that the first SRB and the second SRB are identical, the message for reporting the QoE measurement report is transmitted via the first SRB or second SRB, and
wherein the message for reporting the QoE measurement result includes at least one of identifier information for the configuration information, container information for the encapsulated QoE measurement report, information indicating a start or end of a QoE measurement session, and information on the RAN visible QoE measurement report.

11. The terminal of claim 9, wherein, in case that the first SRB and the second SRB are different, the controller is configured to:
report a first message for the encapsulated QoE measurement report via the first SRB; and
report a second message for the radio access network (RAN) visible QoE measurement report via the second SRB.

12. The terminal of claim 11, wherein the first message includes at least one of identifier information for the configuration information, container information for the encapsulated QoE measurement report, and information on a start or end of a QoE measurement session,
wherein the second message includes identifier information for the configuration information and information on the RAN visible QoE measurement report, and
wherein the base station includes a master base station or a secondary base station of new radio dual connectivity (NR-DC).

13. A base station in a wireless communication system, the base station comprising:
a transceiver; and
a controller connected to the transceiver,
wherein the controller is configured to:
transmit, to a terminal, a message comprising configuration information regarding a quality of experience (QoE); and
receive, from the terminal, a message for reporting a QoE measurement result based on the configuration information, and
wherein the configuration information includes information indicating a first signaling radio bearer (SRB) for an encapsulated QoE measurement report and information indicating a second SRB for a radio access network (RAN) visible QoE measurement report.

14. The base station of claim 13, wherein, in case that first SRB and the second SRB are identical, the message for reporting the QoE measurement result is received via the first SRB or the second SRB, and
wherein the message for reporting the QoE measurement result includes at least one of identifier information for the configuration information, container information for the encapsulated QoE measurement report, information indicating a start or end of a QoE measurement session, and information on the RAN visible QoE measurement report.

15. The base station of claim 13, wherein, in case that the first SRB and the second SRB are different, the controller is configured to:
receive a first message for the encapsulated QoE measurement report via the first SRB, or receive a second message for the radio access network (RAN) visible QoE measurement report via the second SRB,
wherein the first message includes at least one of identifier information for the configuration information, container information for the QoE measurement result, and information on a start or end of a QoE measurement session, and
wherein the second message includes identifier information for the configuration information and information on the RAN visible QoE measurement report.
